# EUROPEAN PATENT APPLICATION

(11) **EP 4 611 419 A1**
(43) Date of publication of application: **03.09.2025**
(21) Application number: 23922468.6
(22) Date of filing: 07.12.2023
(51) Int. Cl.: H04W 24/02

(54) **DATA TRANSMISSION METHOD, ACCESS NODE, TERMINAL, AND STORAGE MEDIUM**

(30) Priority: 17.02.2023 CN 202310172000
(71) Applicant: ZTE Corporation, Shenzhen, Guangdong 518057 (CN)
(72) Inventor: WANG, Yuxin, Shenzhen, Guangdong 518057 (CN); LU, Zhaohua, Shenzhen, Guangdong 518057 (CN); LIU, Wenfeng, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Savi, Massimiliano
(86) International application number: PCT/CN2023/137146
(87) International publication number: WO 2024/169352

(57) **Abstract**

The present application discloses a data transmission method, an access node, a terminal, a computer storage medium and a computer program product. A base station configures a resource for a terminal device, and instructs the terminal device to determine a target receiving mode according to the resource, so that the terminal device can perform measurement by means of the target receiving mode to obtain reporting information; the terminal device sends the reporting information to the base station to complete beam training.

## Description

### CROSS-REFERENCE TO RELATED APPLICATION

This application is filed on the basis of Chinese patent application No. 202310172000.9 filed February 17, 2023, and claims priority to the Chinese patent application, the entire contents of which are incorporated herein by reference.

### TECHNICAL FIELD

The present disclosure relates to the technical field of communications, and more particularly, to a data transmission method, an access node, a terminal device, a computer storage medium, and a computer program product.

### BACKGROUND

With the advancement of wireless communication technologies, low band resources are increasingly tight, and millimeter wave bands with richer spectral resources and larger bandwidth have become important bands for future wireless communication systems. However, the millimeter wave bands have short wavelength, and therefore have the problems such as high path loss and sensitivity to congestion. To address these issues, a millimeter wave signal generally needs to be beamformed, i.e., a suitable beam pair is established and maintained through beam management to achieve the alignment of the beam directions of the transmitter and the receiver, so as to obtain optimal transmission performance.

In the related technologies, beams are generally selected from a predetermined analog beam codebook, so exhaustive scanning of all transmit and receive beam pairs in the codebook is an optimal beam training scheme. However, this scheme leads to high training overheads, measurement power consumption, and processing latency. Therefore, how to obtain ideal beamforming gain and spectral efficiency with lower beam training overheads is an urgent problem to be solved.

### SUMMARY

Embodiments of the present disclosure provide a data transmission method, an access node, a terminal device, a computer storage medium, and a computer program product, to ensure ideal beamforming gain and spectral efficiency while reducing beam training overheads.

In accordance with a first aspect of the present disclosure, an embodiment provides a data transmission method, including: configuring a resource for a terminal device and instructing the terminal device to determine a target receiving mode according to the resource, such that the terminal device performs measurement according to the target receiving mode to obtain reporting information; and receiving the reporting information sent by the terminal device.

In accordance with a second aspect of the present disclosure, an embodiment provides a data transmission method, including: determining a target receiving mode according to resource configuration information of an access node; performing reception according to the target receiving mode and performing measurement to obtain reporting information; and sending the reporting information to the access node.

In accordance with a third aspect of the present disclosure, an embodiment provides a data transmission method, applied to a communication system including an access node and a terminal device, the method including: configuring, by the access node, a resource for the terminal device; determining, by the terminal device, a target receiving mode according to resource configuration information of the access node; performing, by the terminal device, reception according to the target receiving mode and performing measurement to obtain reporting information; sending, by the terminal device, the reporting information to the access node; and receiving, by the access node, the reporting information sent by the terminal device.

In accordance with a fourth aspect of the present disclosure, an embodiment provides an access node, including: at least one processor; and at least one memory, configured for storing at least one program, where the at least one program, when executed by the at least one processor, causes the at least processor to implement the data transmission method in accordance with the first aspect.

In accordance with a fifth aspect of the present disclosure, an embodiment provides a terminal device, including: at least one processor; and at least one memory, configured for storing at least one program, where the at least one program, when executed by the at least one processor, causes the at least processor to implement the data transmission method in accordance with the second aspect.

In accordance with a sixth aspect of the present disclosure, an embodiment provides a computer-readable storage medium, storing a processor-executable program which, when executed by a processor, causes the processor to implement the data transmission method described above.

In accordance with a seventh aspect of the present disclosure, an embodiment provides a computer program product, including a computer program or a computer instruction stored in a computer-readable storage medium, where computer program or computer instruction, when read from the computer-readable storage medium and executed by a processor of a computer device, causes the computer device to implement the data transmission method described above.

According to the data transmission method, the access node, the terminal device, the computer storage medium, and the computer program product provided by the embodiments of the present disclosure, a base station configures a resource for a terminal device, and instructs the terminal device to determine a target receiving mode according to the resource, such that the terminal device performs measurement using the target receiving mode to obtain reporting information, and finally sends the reporting information to the base station, thus completing beam training. Compared with the exhaustive scanning scheme in the related technologies, because the terminal device performs reception and measurement using the target receiving mode indicated by the base station, the beamforming effect can be ensured while reducing beam training overheads.

### BRIEF DESCRIPTION OF DRAWINGS

FIG. 1 is a schematic diagram of P-2 beam management in the related technologies;
FIG. 2 is a schematic diagram of P-3 beam management in the related technologies;
FIG. 3 is a schematic block diagram of a wireless communication system 300 applicable to embodiments of the present disclosure;
FIG. 4 is a flowchart of a data transmission method according to an embodiment of the present disclosure;
FIG. 5 is a schematic flowchart of indicating data retransmission according to an embodiment of the present disclosure;
FIG. 6 is a flowchart of a data transmission method according to an embodiment of the present disclosure;
FIG. 7 is a schematic flowchart of receiving a data retransmission indication and performing data retransmission according to an embodiment of the present disclosure;
FIG. 8 is a schematic diagram of multiple slots according to an embodiment of the present disclosure;
FIG. 9 is a schematic structural diagram of an access node according to an embodiment of the present disclosure; and
FIG. 10 is a schematic structural diagram of a terminal device according to an embodiment of the present disclosure.

### DETAILED DESCRIPTION

To make the objects, technical schemes, and advantages of the present disclosure clearer, the present disclosure is described in further detail in conjunction with accompanying drawings and embodiments. It should be understood that the specific embodiments described herein are merely used for illustrating the present disclosure, and are not intended to limit the present disclosure.

It should be noted that although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second" and the like in the description, the claims, and the accompanying drawings are used to distinguish similar objects, and are not necessarily used to describe a specific sequence or a precedence order.

In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts in a concrete manner.

With the advancement of wireless communication technologies, low band resources are increasingly tight, and millimeter wave bands with richer spectral resources and larger bandwidth have become important bands for future wireless communication systems. However, the millimeter wave bands have short wavelength, with propagation conditions much more severe than those of traditional bands below 6 GHz, and therefore have the problems such as high path loss and sensitivity to congestion. To address these issues, a millimeter wave signal generally needs to be beamformed, i.e., signal energy is concentrated in a small angular space to form a shaped beam with higher gain. A suitable beam pair is established and maintained through beam management to achieve the alignment of the beam directions of the transmitter and the receiver, so as to obtain optimal transmission performance. Beam management is crucial to millimeter wave communication systems, and includes beam sweeping, beam measurement, beam reporting, beam indication, etc.

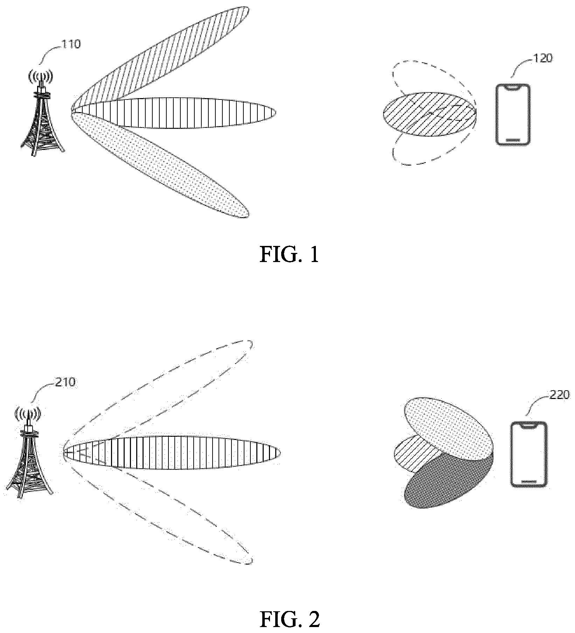

As an important part of beam management, beam sweeping refers to a process in which a base station or a terminal device sequentially uses different analog beams to cover a spatial area. During beam sweeping, the base station or the terminal device sequentially sends beams from an entirety or a subset of a codebook so as to find a desirable transmit-receive beam pair for data and control channels. The beam sweeping process mainly includes a transmit-end beam sweeping P-2 process and a receive-end beam sweeping P-3 process. As shown in FIG. 1, in the P-2 beam management process, the base station configures higher-layer parameter resource sets NZP-CSI-RS-ResourceSet, each including a plurality of downlink Channel State Information Reference Signal (CSI-RS) and/or synchronization signal block (SSB) resources transmitted using different transmit beams, and the terminal device receives and measures the CSI-RS and SSB resources using a fixed receive beam to implement a transmit-end beam measurement process. To be specific, each NZP-CSI-RS Resource is carried on one beam when transmitted, and the terminal device may measure a Reference Signal Received Power (RSRP) of the CSI-RS or SSB transmitted on the NZP-CSI-RS Resource to compare beam quality.

In addition, if the base station does not provide assistance information about the received beam to be used by the terminal device, the terminal device may need to poll the receive beams, i.e., the CSI-RS resource set for beam management needs to be repeatedly transmitted multiple times, and the terminal device respectively uses different receive beams for reception, thus realizing sweeping of the receive beams.

As shown in FIG. 2, in the P-3 beam management process, the base station configures higher-layer parameter resource sets NZP-CSI-RS-ResourceSet, each including a plurality of CSI-RS and SSB resources transmitted using the same transmit beam, and the terminal device receives and measures the CSI-RS and SSB resources using different receive beams, thus realizing sweeping of the receive beams. In addition, the base station may need to poll the transmit beams, i.e., configure a plurality of CSI-RS resource sets transmitted using different transmit beams, so as to facilitate sweeping of the transmit beams.

It should be noted that the resource in the present disclosure refers to one or more resources, and is realized by a resource set or a resource setting. The resource setting includes one or more resource sets, each resource set including one or more resources.

Because beams are generally selected from a predetermined analog beam codebook, exhaustive scanning of all transmit and receive beam pairs in the codebook is an optimal beam training scheme in the related technologies. However, this scheme leads to high training overheads, measurement power consumption, and processing latency.

In view of the above, to reduce beam training overheads and improve beam alignment precision, embodiments of the present disclosure provide a data transmission method, an access node, a terminal device, a computer storage medium, and a computer program product. A base station configures a resource for a terminal device, and instructs the terminal device to determine a target receiving mode according to the resource, such that the terminal device performs measurement using the target receiving mode to obtain reporting information, and finally sends the reporting information to the base station, thus completing beam training. Compared with the exhaustive scanning scheme in the related technologies, because the terminal device performs reception and measurement using the target receiving mode indicated by the base station, the beamforming effect can be ensured while reducing beam training overheads.

The embodiments of the present disclosure may be applied to various communication systems, so the following description is not limited to a particular communication system. For example, the embodiments of the present disclosure may be applied to a Global System for Mobile communications (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunications System (UMTS) system, a 5th Generation (5G) system, a 6th Generation (6G) system, a New Radio (NR) system, etc.

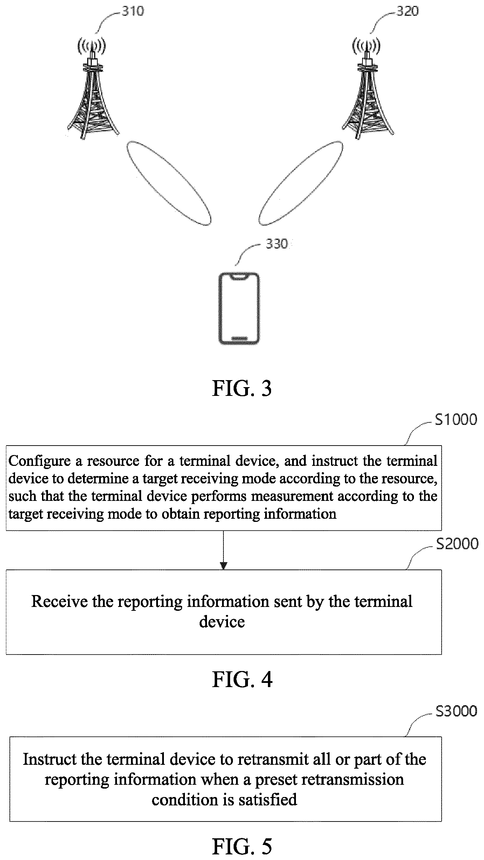

FIG. 3 is a schematic block diagram of a wireless communication system 300 applicable to embodiments of the present disclosure. The wireless communication system 300 may include one or more access nodes and one or more terminal devices. For example, as shown in FIG. 1, the wireless communication system 300 includes a first access node 310, a second access node 320, and one or more terminal devices 330 located within coverage of the first access node 310 and the second access node 320. The terminal device 330 may be mobile or stationary. Both the first access node 310 and the second access node 320 may communicate with the terminal device 330 through a wireless air interface. The first access node 310 and the second access node 320 may provide communication coverage for a particular geographic area and may communicate with terminal devices located within the geographic area.

The first access node 310 or the second access node 320 in the embodiments of the present disclosure may be a base transceiver station (BTS) in a GSM or CDMA system, a NodeB (NB) in a WCDMA system, an evolved NodeB (eNB or eNodeB) in an LTE system, a radio controller in a Cloud Radio Access Network (CRAN) scenario, a relay station, an access point, a vehicle-mounted device, a wearable device, an access node in a future 5G network, or an access node in a future evolved PLMN network, e.g., a transmission and reception point (TRP) or a transmission point (TP) in an NR system, a next generation NodeB (gNB) in an NR system, an antenna panel or an antenna panel group (including a plurality of antenna panels) of a base station in a 5G system, etc. This is not particularly limited in the embodiments of the present disclosure.

The terminal device 330 may also be referred to as a User Equipment (UE), an access terminal device, a subscriber unit, a subscriber station, a mobile station, a mobile, a remote station, a remote terminal, a mobile device, a user terminal, a terminal device, a wireless communication device, a user agent, or a user device. The access terminal device may be a cellular phone, a cordless telephone, a Session Initiation Protocol (SIP) telephone, a Wireless Local Loop (WLL) station, a Personal Digital Assistant (PDA), a handheld device with a wireless communication function, a computing device or other processing device connected to a wireless modem, a vehicle-mounted device, a wearable device, a smart home device, an unmanned aerial vehicle device, a terminal device in a future 5G network, or a terminal device in a future evolved Public Land Mobile Network (PLMN), etc., which is not limited in the embodiments of the present disclosure.

Some concepts involved in the embodiments of the present disclosure are described below.

The receiving mode may also be referred to as a receive beam. A beam may be understood as a type of resource, e.g., a reference signal resource, a transmit-end spatial filter, a receive-end spatial filter, transmit-end precoding, receive-end precoding, an antenna port, an antenna weight vector, an antenna weight matrix, etc. A beam serial number may be replaced with a resource index, e.g., a reference signal resource index, because the beam can be bound to some time-frequency code resources for transmission. In addition, a beam may also be understood as a transmission (transmitting/receiving) mode. Transmission modes may include space division multiplexing, frequency domain/time domain diversity, and the like. Therefore, a beam used for transmitting a signal may be referred to as a transmit beam (Tx beam), and a beam used for receiving a signal may be referred to as a receive beam (Rx beam).

A technique for forming a beam may be a beamforming technique or other techniques. For example, the beamforming technique may be a digital beamforming technique, an analog beamforming technique, a hybrid digital/analog beamforming technique, etc. The transmit beam may refer to spatial distribution of signal intensity formed in different directions after the signal is transmitted by the antenna. The receive beam may refer to spatial distribution of signal intensity in different directions of the wireless signal received from the antenna.

It should be noted that in the embodiments described below, "receive beam" and "receiving mode" are used interchangeably, and have the same meaning when differences therebetween are not emphasized.

A "beam pairing relationship" is a pairing relationship between a transmit beam and a receive beam, i.e., a pairing relationship between a spatial transmit-end filter and a spatial receive-end filter. Transmission of a signal between a transmit beam and a receive beam having a beam pairing relationship can obtain a high beamforming gain.

In an implementation, the transmit end and the receive end may obtain the beam pairing relationship through beam training. The transmit end may transmit a reference signal by beam sweeping, and the receive end may also receive the reference signal by beam sweeping. The transmit end may form beams with different directivity in space by beamforming, and poll on a plurality of beams with different directivity to transmit the reference signal through the beams with different directivity, such that the power of the reference signal transmitted in the direction that the transmit beam points to can be maximized. The receive end may also form beams with different directivity in space by beamforming, and poll on a plurality of beams with different directivity to receive the reference signal through the beams with different directivity, such that the power of the reference signal received by the receive end in the direction that the receive beam points to can be maximized.

By traversing the transmit beams and the receive beams, the receive end may perform channel measurement based on the received reference signal, and report the result of the measurement to the transmit end through Channel State Information (CSI). For example, the receive end may report one or more reference signal resources having a large RSRP to the transmit end, e.g., report an identifier of a reference signal resource, or an identifier of a reference signal resource and the RSRP corresponding to the reference signal resource, such that the transmit end transmit and receive signals using a beam pairing relationship with good channel quality during data or signaling transmission.

The channel measurement in the present disclosure also includes beam measurement, i.e., obtaining beam quality information by measuring a reference signal. Parameters for measuring the beam quality include, but not limited to, RSRP. For example, the beam quality may also be measured by parameters such as a reference signal received quality (RSRQ), signal-noise ratio (SNR), and signal-to-interference plus-noise ratio (SINR). In the embodiments of the present disclosure, for convenience of description, the channel measurement involved may be regarded as beam measurement, unless otherwise specified.

The base station may determine a quasi co-location (QCL) configuration for two reference signals and send the QCL configuration to the terminal device, to describe a channel characteristic assumption. Parameters related to QCL include at least one of: Doppler spread, Doppler shift, delay spread, average delay, average gain, or spatial parameter (e.g., spatial Rx parameter). The spatial parameter may include a spatial reception parameter, e.g., angle of arrival, spatial correlation of the receive beam, average delay, and correlation of the time-frequency channel response (including phase information).

Based on the implementation environment shown in FIG. 3, embodiments of the data transmission method of the present disclosure are proposed. For convenience of description, the access node is described using a base station as an example, and the terminal device is described using a UE as an example.

FIG. 4 is a flowchart of a data transmission method according to an embodiment of the present disclosure. The data transmission method may be applied to, for example, but not limited to, the first access node 310 or the second access node 320 in the implementation environment shown in FIG. 3. The data transmission method may include, but not limited to, the following steps S1000 and S2000.

At S1000, a base station configures a resource for a terminal device, and instruct the terminal device to determine a target receiving mode according to the resource, such that the terminal device performs measurement according to the target receiving mode to obtain reporting information.

In this step, a type of a resource setting specially used for data collection is defined. A parameter configuration in this resource setting includes at least one of: QCL configuration information of a receiving mode, period information and slot offset information, duration information, or data type information to be reported.

In an embodiment, when the parameter configuration in the resource setting includes the QCL configuration information of the receiving mode, the base station instructs, through the QCL configuration information of the receiving mode, the terminal device to determine one or more receiving modes as the target receiving mode. The target receiving mode may be understood as a target receive beam. In other words, according to the QCL configuration information in the parameter configuration, the UE can determine receive beams to be used for reception and measurement of a Layer 1 reference signal received power (L1-RSRP) on the allocated resource, where the determined beams are referred to as target receive beams.

In an embodiment, if the base station does not configure the QCL configuration information of the receive beam for the UE, it means that the UE sequentially uses all the receive beams to perform reception and measurement of a L1-RSRP on the allocated resource, or it means that the UE determines receive beams to be used for reception and measurement of the L1-RSRP on the allocated resource. For example, the UE uses a receive beam 1 for reception and measurement of the L1-RSRP on the allocated resource.

In an embodiment, if the base station configures the QCL information of the receive beam for the UE, the base station instructs the UE to perform reception and measurement of the L1-RSRP on the allocated resource based on one fixed receive beam or a plurality of fixed receive beams, where the plurality of fixed receive beams form a set of receive beams. A reference signal referenceSignal in QCL information (QCL-info) in a transmission configuration indicator (TCI) state is configured as a target CSI-RS.

It can be understood that when it is necessary to indicate a plurality of fixed receive beams for reception and measurement of the L1-RSRP on the allocated resource, QCL information of the plurality of receive beams may be configured. For example, when referenceSignal in QCL-info in TCI state 1 is configured as CSI-RS 1 and referenceSignal in QCL-info in TCI state 2 is configured as CSI-RS 2, the UE is instructed to measure the L1-RSRP on the allocated data collection resource using a receive beam recently used to receive CSI-RS 1 as a receive beam 1 and a receive beam recently used to receive CSI-RS 2 as a receive beam 2.

In this step, the base station in the embodiments of the present disclosure realizes the effect of instructing the UE to use particular beams corresponding to some instants or spatial domains for reception and measurement by defining parameters in the resource setting specially used for data collection. Compared with the exhaustive scanning method in the related technologies, this method can greatly reduce beam training overheads while satisfying ideal beamforming. In addition, in some application scenarios, if there is a beam prediction model that has been trained through machine learning, the beams corresponding to the instants or spatial domains may be used as a model input to predict beams corresponding to other instants or spatial domains, thereby obtaining information of all the beams.

In this step, the data type information to be reported at least includes one of: a L1-RSRP; a CSI resource indicator (CRI); or other assistance information, e.g., information related to a receive beam, timestamp information, location information of the UE, etc.

In an embodiment, when the data type information to be reported includes the L1-RSRP, the access node and the UE predefine quantization precision of the L1-RSRP.

In an embodiment, when an RSRP and/or an SINR is greater than or equal to a first threshold, the UE quantizes the L1-RSRP using a first quantization precision; when an RSRP and/or an SINR is less than the first threshold, the UE quantizes the L1-RSRP using a second quantization precision; and when an index value of a modulation and coding scheme (MCS) is less than a second threshold, the UE quantizes the L1-RSRP using a third quantization precision. The second quantization precision is greater than the first quantization precision, and the third quantization precision is greater than the first quantization precision.

It can be understood that reporting overheads of the UE vary with the quantization precision of the RSRP, i.e., higher precision indicates higher overheads, and lower precision indicates lower overheads. Therefore, the quantization precision of the RSRP can be adaptively adjusted depending on different application scenarios to reduce reporting overheads while ensuring quantization precision.

In an embodiment, when the UE is located in the center of a cell or the RSRP and/or SINR is high, quantization may be performed using original quantization precision in the related technologies, i.e., it is not necessary to increase the quantization precision. For example, when the RSRP and/or the SINR is greater than or equal to the first threshold, the base station and the UE predefine that a quantization precision of 7 bits is used for a maximum RSRP, and a quantization precision of 4 bits is used for a differential RSRP.

In an embodiment, when the UE is located at the edge of a cell or the RSRP and/or SINR is low, the quantization precision may be increased, i.e., the number of quantization bits may be increased. For example, when the RSRP and/or the SINR is less than the first threshold, the base station and the UE predefine that a quantization precision of E bits is used for a maximum RSRP, and a quantization precision of F bits is used for a differential RSRP, where E is an integer greater than 7, and F is an integer greater than 4. For example, the base station and the UE predefine that a quantization precision of 8 bits is used for a maximum RSRP, and a quantization precision of 5 bits is used for a differential RSRP.

In an embodiment, when the index value of the MCS is less than the second threshold, the quantization precision may be increased, i.e., the number of quantization bits may be increased; otherwise, quantization may be performed using original quantization precision in the related technologies.

It should be noted that the specific number of bits of the quantization precision can be flexibly adjusted according to actual needs, and is not limited to the quantization precision schemes provided in the above embodiments.

At S2000, the base station receives the reporting information sent by the terminal device.

In this step, the UE measures the L1-RSRP on the allocated resource based on the resource configuration provided by the base station, and reports L1-RSRP and/or CRI data to the base station; and the base station receives the reporting information sent by the UE.

How to reduce the reporting overheads by adjusting the quantization precision has been described in some embodiments of S1000. In the reporting process of the UE, reporting priorities may be predefined, to define which data is to be preferentially reported.

In an embodiment, when the reporting information includes the L1-RSRP and/or the CRI, the base station and the UE predefine a data reporting priority of the L1-RSRP and/or the CRI.

Embodiments of reporting L1-RSRP and/or CRI information of a space-domain beam are provided below.

In an embodiment, it is predefined that the UE divides the L1-RSRP and/or the CRI into a first part Part 1 and a second part Part 2 for reporting, where a reporting priority of the first part is higher than a reporting priority of the second part. For specific contents stored in Part 1 and Part 2, L1-RSRP and/or CRI contents to be reported may be distributed based on the principle of backward compatibility and considering a priority of CSI. It can be understood that because the reporting priority of Part 1 is higher than the reporting priority of Part 2, contents of Part 1 are preferentially reported. If the reporting overheads are sufficient, contents of Part 2 are also reported. If the reporting overheads are not sufficient to carry all the contents of Part 2, part of the contents of Part 2 may be preferentially reported according to reporting priorities of the contents in Part 2. In some schemes, the reporting information is distributed into Set A and Set B, where Set B is assumed to be a subset of Set A, and then the contents of Part 1 and Part 2 are distributed by configuring contents in Set A and Set B.

In an embodiment, information of the first part includes L largest L1-RSRPs and/or CRIs measured on the resource, and indication information of overheads occupied by the second part, where L is an integer greater than or equal to 1. It can be understood that L1-RSRPs and/or CRIs to be preferentially reported may also be determined according to a preset threshold, i.e., L1-RSRPs and/or CRIs greater than the preset threshold may be preferentially reported as contents of the first part.

In an embodiment, information of the second part includes part or all of remaining L1-RSRPs and/or CRIs measured on the resource other than the L largest L1-RSRPs and/or CRIs measured on the resource, where L is an integer greater than or equal to 1. In other words, the information of the second part is information other than the information in the first part, and will only be partially or completely reported after the first part is reported.

In an embodiment, when only part of the information of the second part can be reported, the remaining L1-RSRPs and/or CRIs may be divided into K groups in descending order, and first M groups of the K groups may be preferentially stored in the second part, where K is an integer greater than or equal to 1, M is an integer greater than or equal to 1, and M is smaller than K. In other words, different information in the second part has respective priorities, and when overheads are insufficient, the information with a higher priority is preferentially reported. It should be noted that dividing L1-RSRPs and/or CRIs into groups in descending order means that sorting the L1-RSRPs and/or CRIs in descending order according to values of the L1-RSRPs and/or CRIs, and then dividing the L1-RSRPs and/or CRIs into a plurality of groups according to a preset group size, where the group ranked in front is preferentially reported.

Embodiments of reporting L1-RSRP and/or CRI information of a time-domain beam prediction are provided below.

In an embodiment, if one report of the UE reports only CSI in one slot, only timestamp information corresponding to the slot needs to be additionally added, which is similar to the method of reporting L1-RSRP and/or CRI information of a space-domain beam.

In an embodiment, if one report of the UE includes CSI corresponding to a plurality of slots, information of the first part includes L largest L1-RSRPs and/or CRIs measured on the resource in a first slot, timestamp information corresponding to the first slot, and indication information of overheads occupied by the second part, where L is an integer greater than or equal to 1. The information of the second part includes remaining L1-RSRPs and/or CRIs other than the information of the first part.

It should be noted that different information in the second part also has respective reporting priorities, which are mainly determined according to values of the L1-RSRPs and/or CRIs and priorities of slots. Specific embodiments are provided below for description.

In an embodiment, a priority of a slot is superior to a priority of a L1-RSRP and/or CRI value, i.e., when storing L1-RSRP and/or CRI contents, priorities of different slots are considered first, and then different priorities of different L1-RSRP and/or CRI values are considered.

In an embodiment, a priority of a L1-RSRP and/or CRI value is superior to a priority of a slot, i.e., when storing L1-RSRP and/or CRI contents, different priorities of different L1-RSRP and/or CRI values are considered first, and then priorities of different slots are considered.

In the above embodiments, by predefining the reporting priority of the reporting information, the reporting overheads can be effectively reduced, and it is ensured that important information is preferentially reported in the case of limited overheads.

FIG. 5 is a schematic flowchart of indicating data retransmission according to an embodiment of the present disclosure. As shown in FIG. 5, the method according to this embodiment of the present disclosure further includes a following step S3000.

At S3000, the terminal device is instructed to retransmit all or part of the reporting information when a preset retransmission condition is satisfied.

In this step, when the reporting resource configured by the base station is insufficient to carry all the contents of Part 2, the contents with lower priority in Part 2 need to be discarded. Alternatively, when a slot in which the UE feeds back CSI is not an uplink slot or when a priority of the reporting information is less than a preset priority threshold (when the priority of the reporting information conflicts with another content with higher priority), contents of the CSI feedback need to be discarded. To enhance the flexibility of CSI feedback, the base station may instruct the UE to retransmit a previously discarded CSI feedback content.

In an embodiment, the base station adds a retransmission indication field of 1 bit to downlink control information (DCI), and the base station configures an indication value of the retransmission indication field, a first reception slot, an indication value of an MCS field, and a retransmission slot parameter to instruct the UE to retransmit, in a transmitting retransmission slot, reporting information corresponding to a target retransmission slot. The first reception slot is a slot in which an indication value of the retransmission indication field received by the UE is a preset indication value. The retransmission slot parameter is indicated by DCI. The target retransmission slot is determined according to the first reception slot and the indication value of the MCS field. The transmitting retransmission slot is determined according to the first reception slot and the retransmission slot parameter.

In an embodiment, the base station adds a retransmission indication field of 1 bit to DCI, and the base station configures an indication value of the retransmission indication field, a first reception slot, and a retransmission slot parameter to instruct the UE to retransmit, in a transmitting retransmission slot, reporting information deleted in a latest slot. The first reception slot is a slot in which an indication value of the retransmission indication field received by the terminal device is a preset indication value. The retransmission slot parameter is indicated by DCI. The transmitting retransmission slot is determined according to the first reception slot and the retransmission slot parameter. It is to be noted that, the latest slot is a nearest slot in time.

In an embodiment, the base station adds a retransmission indication field of 1 bit to DCI, and the base station configures an indication value of the retransmission indication field, a first reception slot, a time window parameter, and a retransmission slot parameter to instruct the UE to retransmit, in a transmitting retransmission slot, reporting information corresponding to a target retransmission slot. The first reception slot is a slot in which an indication value of the retransmission indication field received by the UE is a preset indication value. The time window parameter is configured by higher-layer radio resource control (RRC) signaling or indicated by an MCS field in DCI. The retransmission slot parameter is indicated by DCI. The target retransmission slot is determined according to the time window parameter. The transmitting retransmission slot is determined according to the first reception slot and the retransmission slot parameter.

It should be noted that the base station may add a retransmission indication field of 2 bits or more, which is not limited in the present disclosure.

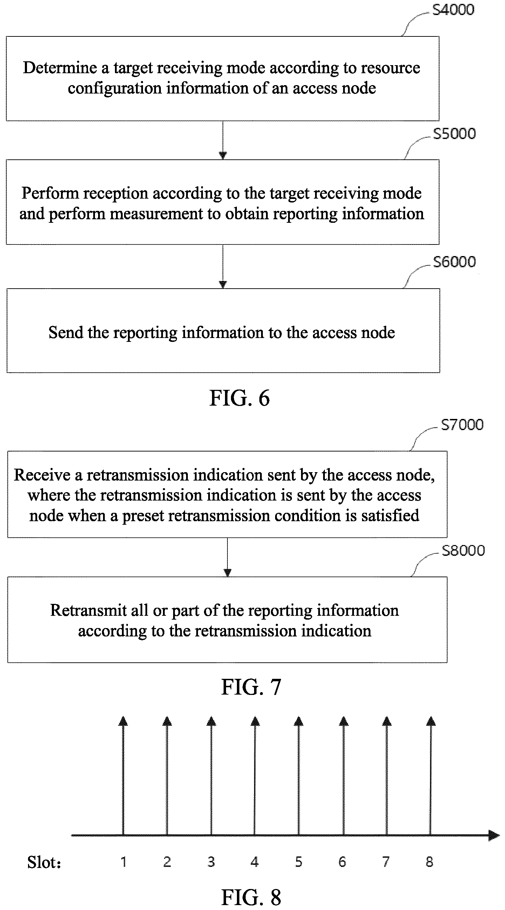

FIG. 6 is a flowchart of a data transmission method according to an embodiment of the present disclosure. The data transmission method may be applied to, for example, but not limited to, the terminal device 330 in the implementation environment shown in FIG. 3. The data transmission method may include, but not limited to, the following steps S4000, S5000, and S6000.

At S4000, a target receiving mode is determined according to resource configuration information of an access node.

In this step, the terminal device determines the target receiving mode according to the resource configuration information of the access node. The access node defines a type of a resource setting specially used for data collection. A parameter configuration in this resource setting includes at least one of: QCL configuration information of a receiving mode, period information and slot offset information, duration information, or data type information to be reported.

In an embodiment, when the parameter configuration in the resource setting includes the QCL configuration information of the receiving mode, the base station instructs, through the QCL configuration information of the receiving mode, the terminal device to determine one or more receiving modes as the target receiving mode. The target receiving mode may be understood as a target receive beam. In other words, according to the QCL configuration information in the parameter configuration, the UE can determine receive beams to be used for reception and measurement of a L1-RSRP on the allocated resource, where the determined beams are referred to as target receive beams.

In an embodiment, if the base station does not configure the QCL configuration information of the receive beam for the UE, it means that the UE sequentially uses all the receive beams to perform reception and measurement of a L1-RSRP on the allocated resource, or it means that the UE determines receive beams to be used for reception and measurement of the L1-RSRP on the allocated resource.

In an embodiment, if the base station configures the QCL information of the receive beam for the UE, the base station instructs the UE to perform reception and measurement of the L1-RSRP on the allocated resource based on one fixed receive beam or a plurality of fixed receive beams, where the plurality of fixed receive beams form a set of receive beams. A reference signal referenceSignal in QCL-info in a TCI state is configured as a target CSI-RS. The UE acquires the target CSI-RS in the QCL-info in the TCI state, and determines a receiving mode recently used to receive the target CSI-RS as the target receiving mode. It should be noted that recently received means being nearest in time.

In this step, the base station in the embodiments of the present disclosure realizes the effect of instructing the UE to use particular beams corresponding to some instants or spatial domains for reception and measurement by defining parameters in the resource setting specially used for data collection. Compared with the exhaustive scanning method in the related technologies, this method can greatly reduce beam training overheads while satisfying ideal beamforming. In addition, in some application scenarios, if there is a beam prediction model that has been trained through machine learning, the beams corresponding to the instants or spatial domains may be used as a model input to predict beams corresponding to other instants or spatial domains, thereby obtaining information of all the beams.

At S5000, reception is performed according to the target receiving mode and measurement is performed to obtain reporting information.

In this step, the data type information to be reported at least includes one of: a L1-RSRP; a CRI; or other assistance information, e.g., information related to a receive beam, timestamp information, location information of the UE, etc.

In an embodiment, when the data type information to be reported includes the L1-RSRP, the access node and the UE predefine quantization precision of the L1-RSRP.

In an embodiment, when an RSRP and/or an SINR is greater than or equal to a first threshold, the UE quantizes the L1-RSRP using a first quantization precision; when an RSRP and/or an SINR is less than the first threshold, the UE quantizes the L1-RSRP using a second quantization precision; and when an index value of an MCS is less than a second threshold, the UE quantizes the L1-RSRP using a third quantization precision. The second quantization precision is greater than the first quantization precision, and the third quantization precision is greater than the first quantization precision.

It can be understood that reporting overheads of the UE vary with the quantization precision of the RSRP, i.e., higher precision indicates higher overheads, and lower precision indicates lower overheads. Therefore, the quantization precision of the RSRP can be adaptively adjusted depending on different application scenarios to reduce reporting overheads while ensuring quantization precision.

In an embodiment, when the UE is located in the center of a cell or the RSRP and/or SINR is high, quantization may be performed using original quantization precision in the related technologies, i.e., it is not necessary to increase the quantization precision. For example, when the RSRP and/or the SINR is greater than or equal to the first threshold, the base station and the UE predefine that a quantization precision of 7 bits is used for a maximum RSRP, and a quantization precision of 4 bits is used for a differential RSRP.

In an embodiment, when the UE is located at the edge of a cell or the RSRP and/or SINR is low, the quantization precision may be increased, i.e., the number of quantization bits may be increased. For example, when the RSRP and/or the SINR is less than the first threshold, the base station and the UE predefine that a quantization precision of 8 bits is used for a maximum RSRP, and a quantization precision of 5 bits is used for a differential RSRP.

In an embodiment, when the index value of the MCS is less than the second threshold, the quantization precision may be increased, i.e., the number of quantization bits may be increased; otherwise, quantization may be performed using original quantization precision in the related technologies.

It should be noted that the specific number of bits of the quantization precision can be flexibly adjusted according to actual needs, and is not limited to the quantization precision schemes provided in the above embodiments.

At S6000, the reporting information is sent to the access node.

How to reduce the reporting overheads by adjusting the quantization precision has been described in some embodiments of S1000. In the reporting process of the UE, reporting priorities may be predefined, to define which data is to be preferentially reported.

In an embodiment, when the reporting information includes the L1-RSRP and/or the CRI, the base station and the UE predefine a data reporting priority of the L1-RSRP and/or the CRI.

Embodiments of reporting L1-RSRP and/or CRI information of a space-domain beam are provided below.

In an embodiment, it is predefined that the UE divides the L1-RSRP and/or the CRI into a first part Part 1 and a second part Part 2 for reporting, where a reporting priority of the first part is higher than a reporting priority of the second part. For the specific content stored in Part 1 and Part 2, the L1-RSRP and/or CRI contents to be reported may be distributed based on the principle of backward compatibility and considering a priority of CSI. It can be understood that because the reporting priority of Part 1 is higher than the reporting priority of Part 2, contents of Part 1 are preferentially reported. If the reporting overheads are sufficient, contents of Part 2 are also reported. If the reporting overheads are not sufficient to carry all the contents of Part 2, part of the contents of Part 2 may be preferentially reported according to reporting priorities of the contents in Part 2. In some schemes, the reporting information is distributed into Set A and Set B, where Set B is assumed to be a subset of Set A, and then the contents of Part 1 and Part 2 are distributed by configuring contents in Set A and Set B.

In an embodiment, information of the first part includes L largest L1-RSRPs and/or CRIs measured on the resource, and indication information of overheads occupied by the second part, where L is an integer greater than or equal to 1. It can be understood that L1-RSRPs and/or CRIs to be preferentially reported may also be determined according to a preset threshold, i.e., L1-RSRPs and/or CRIs greater than the preset threshold may be preferentially reported as contents of the first part.

In an embodiment, information of the second part includes part or all of remaining L1-RSRPs and/or CRIs measured on the resource other than the L largest L1-RSRPs and/or CRIs measured on the resource, where L is an integer greater than or equal to 1. In other words, the information of the second part is information other than the information in the first part, and will only be partially or completely reported after the first part is reported.

In an embodiment, when only part of the information of the second part can be reported, the remaining L1-RSRPs and/or CRIs may be divided into K groups in descending order, and first M groups of the K groups may be preferentially stored in the second part, where K is an integer greater than or equal to 1, M is an integer greater than or equal to 1, and M is smaller than K. In other words, different information in the second part respectively has a priority, and when overheads are insufficient, the information with a higher priority is preferentially reported. It should be noted that dividing L1-RSRPs and/or CRIs into groups in descending order means that sorting the L1-RSRPs and/or CRIs in descending order according to values of the L1-RSRPs and/or CRIs, and then dividing the L1-RSRPs and/or CRIs into a plurality of groups according to a preset group size, where the group ranked in front is preferentially reported.

Embodiments of reporting L1-RSRP and/or CRI information of a time-domain beam are provided below.

In an embodiment, if one report of the UE reports only CSI in one slot, only timestamp information corresponding to the slot needs to be additionally added, which is similar to the method of reporting L1-RSRP and/or CRI information of a space-domain beam.

In an embodiment, as shown in FIG. 5, if one report of the UE includes CSI corresponding to a plurality of slots, information of the first part includes L largest L1-RSRPs and/or CRIs measured on the resource in a first slot, timestamp information corresponding to the first slot, and indication information of overheads occupied by the second part, where L is an integer greater than or equal to 1. The information of the second part includes remaining L1-RSRPs and/or CRIs other than the information of the first part.

It should be noted that different information in the second part also has respective reporting priorities, which are mainly determined according to values of the L1-RSRPs and/or CRIs and priorities of slots. Specific embodiments are provided below for description.

In an embodiment, a priority of a slot is superior to a priority of a L1-RSRP and/or CRI value, i.e., when storing L1-RSRP and/or CRI contents, priorities of different slots are considered first, and then different priorities of different L1-RSRP and/or CRI values are considered.

In an embodiment, a priority of a L1-RSRP and/or CRI value is superior to a priority of a slot, i.e., when storing L1-RSRP and/or CRI contents, different priorities of different L1-RSRP and/or CRI values are considered first, and then priorities of different slots are considered.

In the above embodiments, by predefining the reporting priority of the reporting information, the reporting overheads can be effectively reduced, and it is ensured that important information is preferentially reported in the case of limited overheads.

FIG. 7 is a schematic flowchart of receiving a data retransmission indication and performing data retransmission according to an embodiment of the present disclosure. As shown in FIG. 7, the method according to this embodiment of the present disclosure further includes the following steps S7000 and S8000.

At S7000, a retransmission indication sent by the access node is received, where the retransmission indication is sent by the access node when a preset retransmission condition is satisfied.

In this step, when the reporting resource configured by the base station is insufficient to carry all the contents of Part 2, the contents with lower priority in Part 2 need to be discarded. Alternatively, when a slot in which the UE feeds back CSI is not an uplink slot or when a priority of the reporting information is less than a preset priority threshold (when the priority of the reporting information conflicts with another content with higher priority), contents of the CSI feedback need to be discarded. To enhance the flexibility of CSI feedback, the base station may instruct the UE to retransmit a previously discarded CSI feedback content. The terminal device receives the retransmission indication sent by the access node, and determines a retransmission content and a retransmission time.

In this step, when the reporting resource configured by the base station is insufficient to carry all the contents of Part 2, the contents with lower priority in Part 2 need to be discarded. Alternatively, when a slot in which the UE feeds back CSI is not an uplink slot or when a priority of the reporting information is less than a preset priority threshold (when the priority of the reporting information conflicts with another content with higher priority), contents of the CSI feedback need to be discarded. To enhance the flexibility of CSI feedback, the base station may instruct the UE to retransmit a previously discarded CSI feedback content.

In an embodiment, the base station adds a retransmission indication field of 1 bit to DCI, and the base station configures an indication value of the retransmission indication field, a first reception slot, an indication value of an MCS field, and a retransmission slot parameter to instruct the UE to retransmit, in a transmitting retransmission slot, reporting information corresponding to a target retransmission slot. The first reception slot is a slot in which an indication value of the retransmission indication field received by the UE is a preset indication value. The retransmission slot parameter is indicated by DCI. The target retransmission slot is determined according to the first reception slot and the indication value of the MCS field. The transmitting retransmission slot is determined according to the first reception slot and the retransmission slot parameter.

In an embodiment, the base station adds a retransmission indication field of 1 bit to DCI, and the base station configures an indication value of the retransmission indication field, a first reception slot, and a retransmission slot parameter to instruct the UE to retransmit, in a transmitting retransmission slot, reporting information deleted in a latest slot. The first reception slot is a slot in which an indication value of the retransmission indication field received by the terminal device is a preset indication value. The retransmission slot parameter is indicated by DCI. The transmitting retransmission slot is determined according to the first reception slot and the retransmission slot parameter. The latest slot is a nearest slot in time.

In an embodiment, the base station adds a retransmission indication field of 1 bit to DCI, and the base station configures an indication value of the retransmission indication field, a first reception slot, a time window parameter, and a retransmission slot parameter to instruct the UE to retransmit, in a transmitting retransmission slot, reporting information corresponding to a target retransmission slot. The first reception slot is a slot in which an indication value of the retransmission indication field received by the UE is a preset indication value. The time window parameter is configured by higher-layer RRC signaling or indicated by an MCS field in DCI. The retransmission slot parameter is indicated by DCI. The target retransmission slot is determined according to the time window parameter. The transmitting retransmission slot is determined according to the first reception slot and the retransmission slot parameter.

At S8000, all or part of the reporting information is retransmitted according to the retransmission indication.

Specific examples are given below to more clearly illustrate the operating principles of the above embodiments.

### Example One:

In this example, the method includes the following steps S101 to S103.

At S101, a base station configures a measurement resource for a UE.

The base station defines a type of a resource setting specially used for data collection. A parameter configuration in this resource setting includes period, slot offset, duration, data type to be reported (including RSRP/SINR/CIR, and CRI; other assistance information, e.g., information related to a receive beam, timestamp, location of the UE, etc.), and QCL configuration information of the receive beam.

For the QCL configuration information of the receive beam, if the base station does not configure this parameter for the UE, it means that the UE sequentially uses all the receive beams to perform reception and measurement of a L1-RSRP on the allocated resource, or it means that the UE determines receive beams to be used for reception and measurement of the L1-RSRP on the allocated resource.

If the base station configures the QCL information of the receive beam for the UE, the base station instructs the UE to perform reception and measurement of the L1-RSRP on the allocated resource based on one fixed receive beam or one set of fixed receive beams. For example, when referenceSignal in QCL-info in TCI state 1 is configured as CSI-RS 1 and referenceSignal in QCL-info in TCI state 2 is configured as CSI-RS 2, the UE is instructed to measure the L1-RSRP on the allocated data collection resource using a receive beam recently used to receive CSI-RS 1 as a receive beam 1 and a receive beam recently used to receive CSI-RS 2 as a receive beam 2.

At S102, the UE measures the L1-RSRP on the allocated resource.

Based on a resource configuration, the UE measures the L1-RSRP on the allocated resource.

At S103, the UE reports the L1-RSRP and/or the CRI to the base station.

To reduce the reporting overheads, the UE may measure the L1-RSRP on the allocated resource based on only one receive beam or one set of receive beams, and report data, where the reported data includes the L1-RSRP and/or the CRI.

### Example Two:

In this example, according to the requirements of different application scenarios, reporting overheads of the L1-RSRP need to be controlled within a certain range, so different L1-RSRP quantization precision may be used.

For example, for a user in the center of a cell or with a high SINR, or for a user whose RSRP or SINR is greater than or equal to a threshold P, the quantization precision is not increased, and the original quantization precision is adopted, i.e., a maximum RSRP is quantized using 7 bits, and a differential RSRP is quantized using 4 bits.

For example, for a user at the edge of a cell or with a low SINR, or for a user whose RSRP or SINR is less than the threshold P, the number of quantization bits is increased for both the maximum RSRP and the differential RSRP, e.g., respectively increased to 8 bits and 5 bits.

For example, the number of quantization bits is bound to an MCS of the user. If the MCS is lower than a threshold Q, the number of quantization bits is increased for both the maximum RSRP and the differential RSRP. Otherwise, the original numbers of quantization bits in Release 17 (R17) is used, i.e., the maximum RSRP is quantized using 7 bits, and the differential RSRP is quantized using 4 bits.

### Example Three:

In this example, to reduce reporting overheads, a reporting priority of a space-domain beam may be predefined. The L1-RSRP may be divided into Part 1 and Part 2 for reporting. Based on the principle of backward compatibility and considering the priority of CSI, CSI contents to be reported may be distributed as follows (assuming that Set B is a subset of Set A and is configured at the same instant).

In this example, Part 1 stores four largest CRIs/L1-RSRPs in Set B (denoted as SetB_Max4) and indication information of overheads of Part 2. Part 2 stores (Set A - SetB_Max4) CRIs/L1-RSRPs; and the (Set A - SetB_Max4) CRIs/L1-RSRPs are divided into K groups. Priorities of the stored contents satisfy: largest set of CRIs/L1-RSRPs > second largest set of CRIs/L1-RSRPs > ... > smallest set of CRIs/L1-RSRPs.

### Example Four:

In this example, to reduce reporting overheads, a reporting priority of a time-domain beam may be predefined. The L1-RSRP may be divided into Part 1 and Part 2 for reporting. If one report only reports CSI of one instant, Part 1 stores four largest CRIs/L1-RSRPs in Set B of one instant (denoted as SetB_Max4), corresponding timestamp information, and indication information of overheads of Part 2. Part 2 stores (Set A - SetB_Max4) CRIs/L1-RSRPs; and the (SetA- SetB_Max4) CRIs/L1-RSRPs are divided into K groups. Priorities of the stored contents satisfy: largest set of CRIs/L1-RSRPs > second largest set of CRIs/L1-RSRPs > ... > smallest set of CRIs/L1-RSRPs.

### Example Five:

In this example, to reduce reporting overheads, a reporting priority of a time-domain beam may be predefined. The L1-RSRP may be divided into Part 1 and Part 2 for reporting. As shown in FIG. 8, if one report can report CSI of a plurality of instants, Part 1 stores four largest CRIs/L1-RSRPs in Set B in Slot 1 (denoted as SetB_Max4), corresponding timestamp information, and indication information of overheads of Part 2. Part 2 stores CRIs/L1-RSRPs in other slots, priorities of the stored contents (a priority of a slot is superior to a priority of a L1-RSRP value in a slot). A specific storage order in Part 2 is as follows:
> largest set of CRIs/L1-RSRPs in Set A in Slot 5
> largest set of CRIs/L1-RSRPs in Set B in Slot 3
> largest set of CRIs/L1-RSRPs in Set A in Slot 7
> largest set of CRIs/L1-RSRPs in Set B in Slot 2
> largest set of CRIs/L1-RSRPs in Set A in Slot 6
> largest set of CRIs/L1-RSRPs in Set B in Slot 4
> largest set of CRIs/L1-RSRPs in Set A in Slot 8
> second largest set of CRIs/L1-RSRPs in Slot 5

### Example Six:

This example differs from Example Five in that a priority of a L1-RSRP value in a slot is superior to a priority of a slot, and a specific storage order of Part 2 is as follows:
> largest set of CRIs/L1-RSRPs in Set A in Slot 5
> second largest set of CRIs/L1-RSRPs in Set A in Slot 5
   ...
> smallest set of CRIs/L1-RSRPs in Set A in Slot 5
> second largest set of CRIs/L1-RSRPs in Set B in Slot 2
   ...
> smallest set of CRIs/L1-RSRPs in Set B in Slot 2
   ...
> second largest set of CRIs/L1-RSRPs in Set A in Slot 8
   ...
> smallest set of CRIs/L1-RSRPs in Set A in Slot 8

### Example Seven:

A 1-bit L1-RSRP/RSRP/CRI retransmission indication field is added in DCI formats 1-1 and 1-2. When a value of the indication field in DCI received by the UE in slot n is 1, CSI feedback contents discarded by the UE in slot m are retransmitted. m=n-f, where the value of f is indicated by an MCS field in this DCI. Slots for transmitting the retransmission CSI are n+k, and the value of k is indicated by the DCI.

### Example Eight:

A 1-bit L1-RSRP/RSRP/CRI retransmission indication field is added in DCI formats 1-1 and 1-2. When a value of the indication field in DCI received by the UE in slot n is 1, CSI feedback contents discarded by the UE in a latest slot are retransmitted, or all discarded CSI feedback contents in a time window are retransmitted. The size of the time window is g, which is configured by higher-layer RRC signaling or is indicated by the MCS field in the DCI. A start slot and an end slot of the time window are n-g and n, respectively. Slots for transmitting the retransmission CSI are n+k, and the value of k is indicated by the DCI.

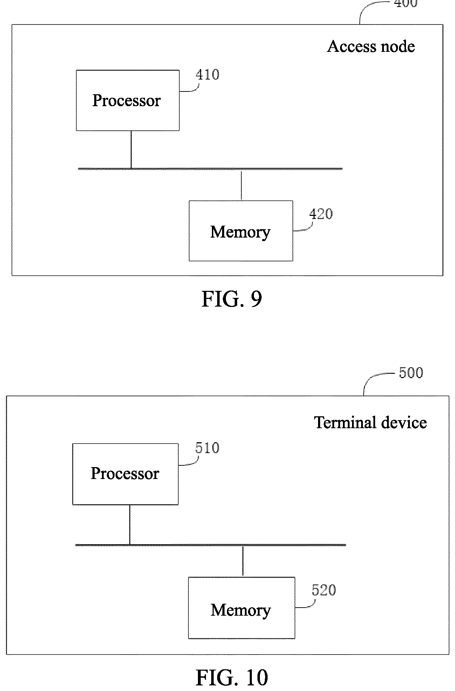

In addition, as shown in FIG. 9, an embodiment of the present disclosure discloses an access node 400, including: at least one processor 410; and at least one memory 420, configured for storing at least one program. The at least one program, when executed by the at least one processor 410, causes the at least one processor 410 to implement the data transmission method including the steps S1000 to S3000.

In addition, as shown in FIG. 10, an embodiment of the present disclosure discloses a terminal device 500, including: at least one processor 510; and at least one memory 520, configured for storing at least one program. The at least one program, when executed by the at least one processor 510, causes the at least one processor 510 to implement the data transmission method including the steps S4000 to S8000.

In addition, an embodiment of the present disclosure discloses a computer-readable storage medium, storing a computer-executable instruction which, when executed by a processor, causes the processor to implement the data transmission method according to any one of the above embodiments.

In addition, an embodiment of the present disclosure discloses a computer program product, including a computer program or a computer instruction stored in a computer-readable storage medium, where the computer program or the computer instruction, when read from the computer-readable storage medium and executed by a processor of a computer device, causes the computer device to implement the data transmission method according to any of the above embodiments.

The system architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art may know that with the evolution of the system architecture and the emergence of new application scenarios, the technical schemes provided in the embodiments of the present disclosure are also applicable to similar technical problems.

Those having ordinary skills in the art can understand that all or some of the steps in the methods disclosed above and the functional modules/units in the system and the apparatus can be implemented as software, firmware, hardware, and appropriate combinations thereof.

In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

As used in this description, the terms "component," "module," "system," and the like are used to denote computer-related entities, hardware, firmware, a combination of hardware and software, software, or software in execution. For example, a component may be, but not limited to, a process running on a processor, a processor, an object, an executable file, a thread of execution, a program, or a computer. An application running on a computing device and the computing device may both be illustrated as components. One or more components may reside in a process or thread of execution. A component may be located on one computer or distributed on two or more computers. In addition, the components may be executed from various computer-readable media having various data structures stored therein. The components may communicate via local and/or remote processes such as in accordance with a signal having one or more data packets (e.g., data from one component interacting with another component in a local system, distributed system, and/or across a network such as the Internet with other systems via the signal).

## Claims

1. A data transmission method, applied to an access node, the method comprising:
configuring a resource for a terminal device and instructing the terminal device to determine a target receiving mode according to the resource, such that the terminal device performs measurement according to the target receiving mode to obtain reporting information; and
receiving the reporting information sent by the terminal device.

2. The data transmission method of claim 1, wherein the resource at least comprises one of the following parameters:
quasi co-location (QCL) configuration information of a receiving mode;
period information and slot offset information;
duration information; or
data type information to be reported.

3. The data transmission method of claim 2, wherein when the resource comprises the QCL configuration information of the receiving mode, instructing the terminal device to determine a target receiving mode according to the resource comprises:
instructing, according to the QCL configuration information of the receiving mode, the terminal device to determine one or more receiving modes as the target receiving mode.

4. The data transmission method of claim 1 or 3, wherein configuring a resource for a terminal device and instructing the terminal device to determine a target receiving mode according to the resource comprises:
configuring a reference signal referenceSignal in QCL information (QCL-info) in a transmission configuration indicator (TCI) state as a target channel state information (CSI) reference signal (RS) (CSI-RS); and
instructing the terminal device to determine a receiving mode recently used to receive the target CSI-RS as the target receiving mode.

5. The data transmission method of claim 2, wherein the data type information to be reported at least comprises one of:
a Layer 1 reference signal received power (L1-RSRP); or
a CSI resource indicator (CRI).

6. The data transmission method of claim 5, wherein when the data type information to be reported comprises the L1-RSRP, the access node and the terminal device predefine quantization precision of the L1-RSRP.

7. The data transmission method of claim 6, wherein that the access node and the terminal device predefine quantization precision of the L1-RSRP comprises:
in response to an RSRP and/or a signal-to-interference plus-noise ratio (SINR) being greater than or equal to a first threshold, the terminal device quantizes the L1-RSRP using a first quantization precision;
in response to an RSRP and/or an SINR being less than the first threshold, the terminal device quantizes the L1-RSRP using a second quantization precision; and
in response to an index value of a modulation and coding scheme (MCS) being less than a second threshold, the terminal device quantizes the L1-RSRP using a third quantization precision;
wherein the second quantization precision is greater than the first quantization precision, and the third quantization precision is greater than the first quantization precision.

8. The data transmission method of claim 1, wherein when the reporting information comprises a L1-RSRP and/or a CRI, the access node and the terminal device predefine a data reporting priority of the L1-RSRP and/or the CRI.

9. The data transmission method of claim 8, wherein that the access node and the terminal device predefine a data reporting priority of the L1-RSRP and/or the CRI comprises:
predefining that the terminal device divides the L1-RSRP and/or the CRI into a first part and a second part for reporting, wherein a reporting priority of the first part is higher than a reporting priority of the second part.

10. The data transmission method of claim 9, wherein information of the first part comprises L largest L1-RSRPs and/or CRIs measured on the resource, and indication information of overheads occupied by the second part, wherein L is an integer greater than or equal to 1.

11. The data transmission method of claim 9, wherein information of the second part comprises part or all of remaining L1-RSRPs and/or CRIs measured on the resource other than L largest L1-RSRPs and/or CRIs measured on the resource, wherein L is an integer greater than or equal to 1.

12. The data transmission method of claim 11, wherein when the information of the second part comprises part of the remaining L1-RSRPs and/or CRIs, the remaining L1-RSRPs and/or CRIs are divided into K groups in descending order, and first M groups of the K groups are preferentially stored in the second part, wherein K is an integer greater than or equal to 1, M is an integer greater than or equal to 1, and M is smaller than K.

13. The data transmission method of claim 9, wherein when one report comprises reporting information corresponding to a plurality of target slots, information of the first part comprises L largest L1-RSRPs and/or CRIs measured on the resource in a first target slot, timestamp information corresponding to the first target slot, and indication information of overheads occupied by the second part, wherein L is an integer greater than or equal to 1.

14. The data transmission method of claim 9, wherein when one report comprises reporting information corresponding to a plurality of target slots, information of the second part comprises remaining L1-RSRPs and/or CRIs measured on the resource in remaining target slots other than a first target slot other than L largest L1-RSRPs, wherein a priority of a slot is superior to a priority of a L1-RSRP value in a slot, or a priority of a L1-RSRP value in a slot is superior to a priority of a slot.

15. The data transmission method of any one of claims 9 to 14, further comprising:
instructing the terminal device to retransmit all or part of the reporting information, in response to a preset retransmission condition being satisfied.

16. The data transmission method of claim 15, wherein the preset retransmission condition at least comprises one of that:
a reporting resource for the second part is insufficient to carry all information of the second part;
a slot in which the terminal device sends the reporting information is not an uplink slot; or
a priority of the reporting information is less than a preset priority threshold.

17. A data transmission method, applied to a terminal device, the method comprising:
determining a target receiving mode according to resource configuration information of an access node;
performing reception according to the target receiving mode and performing measurement to obtain reporting information; and
sending the reporting information to the access node.

18. The data transmission method of claim 17, wherein the resource configuration information at least comprises one of:
quasi co-location (QCL) configuration information of a receiving mode;
period information and slot offset information;
duration information; or
data type information to be reported.

19. The data transmission method of claim 17, wherein when the resource configuration information comprises the QCL configuration information of the receiving mode, determining a target receiving mode according to resource configuration information of an access node comprises:
determining one or more receiving modes as the target receiving mode according to the QCL configuration information of the receiving mode.

20. The data transmission method of claim 19, wherein determining a target receiving mode according to resource configuration information of an access node comprises:
acquiring a target channel state information (CSI) reference signal (RS) (CSI-RS) in QCL information (QCL-info) in a transmission configuration indicator (TCI) state; and
determining a receiving mode recently used to receive the target CSI-RS as the target receiving mode.

21. The data transmission method of claim 18, wherein the data type information to be reported at least comprises one of:
a Layer 1 reference signal received power (L1-RSRP); or
a CSI resource indicator (CRI).

22. The data transmission method of claim 21, wherein when the data type information to be reported comprises the L1-RSRP, the access node and the terminal device predefine quantization precision of the L1-RSRP.

23. The data transmission method of claim 22, wherein that the access node and the terminal device predefine quantization precision of the L1-RSRP comprises:
in response to an RSRP and/or a signal-to-interference plus-noise ratio (SINR) being greater than or equal to a first threshold, the terminal device quantizes the L1-RSRP using a first quantization precision;
in response to an RSRP and/or an SINR being less than the first threshold, the terminal device quantizes the L1-RSRP using a second quantization precision; and
in response to an index value of a modulation and coding scheme (MCS) being less than a second threshold, the terminal device quantizes the L1-RSRP using a third quantization precision;
wherein the second quantization precision is greater than the first quantization precision, and the third quantization precision is greater than the first quantization precision.

24. The data transmission method of claim 17, wherein when the reporting information comprises a L1-RSRP and/or a CRI, the access node and the terminal device predefine a data reporting priority of the L1-RSRP and/or the CRI.

25. The data transmission method of claim 24, wherein that the access node and the terminal device predefine a data reporting priority of the L1-RSRP and/or the CRI comprises:
predefining that the terminal device divides the L1-RSRP and/or the CRI into a first part and a second part for reporting, wherein a priority of the first part is higher than a priority of the second part.

26. The data transmission method of claim 25, wherein information of the first part comprises L largest L1-RSRPs and/or CRIs measured on the resource, and indication information of overheads occupied by the second part, wherein L is an integer greater than or equal to 1.

27. The data transmission method of claim 25, wherein information of the second part comprises part or all of remaining L1-RSRPs and/or CRIs measured on the resource other than L largest L1-RSRPs measured on the resource, wherein L is an integer greater than or equal to 1.

28. The data transmission method of claim 27, wherein when the information of the second part comprises part of the remaining L1-RSRPs and/or CRIs, the remaining L1-RSRPs and/or CRIs are divided into K groups in descending order, and first M groups of the K groups are preferentially stored in the second part, wherein K is an integer greater than or equal to 1, M is an integer greater than or equal to 1, and M is smaller than K.

29. The data transmission method of claim 25, wherein when one report comprises reporting information corresponding to a plurality of target slots, information of the first part comprises L largest L1-RSRPs and/or CRIs measured on the resource in a first target slot, timestamp information corresponding to the first target slot, and indication information of overheads occupied by the second part, wherein L is an integer greater than or equal to 1.

30. The data transmission method of claim 25, wherein when one report comprises reporting information corresponding to a plurality of target slots, information of the second part comprises remaining L1-RSRPs and/or CRIs measured on the resource in remaining target slots other than a first target slot other than L largest L1-RSRPs, wherein a priority of a slot is superior to a priority of a L1-RSRP value in a slot, or a priority of a L1-RSRP value in a slot is superior to a priority of a slot.

31. The data transmission method of any one of claims 25 to 30, further comprising:
receiving a retransmission indication sent by the access node, wherein the retransmission indication is sent by the access node in response to a preset retransmission condition being satisfied; and
retransmitting all or part of the reporting information according to the retransmission indication.

32. The data transmission method of claim 31, wherein the preset retransmission condition at least comprises one of that:
a reporting resource for the second part is insufficient to carry all information of the second part;
a slot in which the terminal device sends the reporting information is not an uplink slot; or
a priority of the reporting information is less than a preset priority threshold.

33. A data transmission method, applied to a communication system comprising an access node and a terminal device, the method comprising:
configuring, by the access node, a resource for the terminal device;
determining, by the terminal device, a target receiving mode according to resource configuration information of the access node;
performing, by the terminal device, reception according to the target receiving mode and performing measurement to obtain reporting information;
sending, by the terminal device, the reporting information to the access node; and
receiving, by the access node, the reporting information sent by the terminal device.

34. An access node, comprising:
at least one processor; and
at least one memory, configured for storing at least one program,
wherein the at least one program, when executed by the at least one processor, causes the at least processor to perform the data transmission method of any one of claims 1 to 16.

35. A terminal device, comprising:
at least one processor; and
at least one memory, configured for storing at least one program,
wherein the at least one program, when executed by the at least one processor, causes the at least processor to perform the data transmission method of any one of claims 17 to 32.

36. A computer-readable storage medium, storing a processor-executable program which, when executed by a processor, causes the processor to perform the data transmission method of any one of claims 1 to 33.

37. A computer program product, comprising a computer program or a computer instruction stored in a computer-readable storage medium, wherein the computer program or the computer instruction, when read from the computer-readable storage medium and executed by a processor of a computer device, causes the computer device to perform the data transmission method of any one of claims 1 to 33.
